# FASCICULE DE BREVET EUROPEEN

(11) **EP 3 931 821 B1**
(45) Date de publication et mention de la délivrance du brevet: **18.09.2024**
(21) Numéro de dépôt: 20719677.5
(22) Date de dépôt: 27.02.2020
(51) Int. Cl.: G10K 11/172, E04B 1/86, B29D 99/00

(54) **PROCÉDÉ D'ÉLABORATION D'ÂMES ALVÉOLAIRES À FORMES CONIQUES INTERNES OUVERTES**
VERFAHREN ZUR HERSTELLUNG VON WABENFÖRMIGEN KERNEN MIT OFFENEN INNEREN KONISCHEN FORMEN
METHOD FOR CREATING ALVEOLAR CORES HAVING OPEN INNER CONICAL SHAPES

(30) Priorité: 28.02.2019 FR 1902109
(43) Date de publication de la demande: 05.01.2022
(73) Titulaire: Safran Nacelles, 76700 Gonfreville-l'Orcher (FR)
(72) Inventeur: DESJOYEAUX, Bertrand, 77550 Moissy Cramayel (FR); VERSAEVEL, Marc, 77550 Moissy Cramayel (FR); PREAU, Mathieu, 77550 Moissy Cramayel (FR); MOREAU, Laurent, 77550 Moissy Cramayel (FR)
(74) Mandataire: Germain Maureau
(86) Numéro de dépôt international: PCT/FR2020/050384
(87) Numéro de publication internationale: WO 2020/174192

(56) Documents cités:
- GB-A- 1 470 036
- GB-A- 1 470 036
- US-A- 4 265 955
- US-A- 4 265 955
- US-A1- 2013 062 143
- US-A1- 2015 027 629
- US-A1- 2015 041 247
- US-A1- 2015 041 247
- US-A1- 2015 041 248
- US-B1- 9 469 985
- US-B1- 9 469 985

## Description

La présente invention concerne un procédé de fabrication d'une structure à âme alvéolaire pour panneau d'atténuation acoustique. La présente invention concerne aussi une structure à âme alvéolaire pour panneau d'atténuation acoustique, obtenue à partir du procédé de fabrication selon l'invention, ainsi qu'un panneau d'atténuation acoustique comportant une structure à âme alvéolaire selon l'invention.

Les turboréacteurs d'aéronef sont générateurs d'une pollution sonore importante. il existe une forte demande visant ä réduire cette pollution, et ce d'autant plus que les turboréacteurs utilisés deviennent de plus en plus puissants. La conception de la nacelle entourant un turboréacteur contribue pour une grande partie à la réduction de cette pollution sonore.

Afin d'améliorer d'avantage les performances acoustiques des aéronefs, les nacelles sont dotées de panneaux d'atténuation acoustiques visa nt à atténuer les bruits dus à la circulation des flux d'air à travers le turboréacteur ainsi qu'aux vibrations des structures de la nacelle.

Les panneaux d'atténuation acoustiques sont des structures de type sandwich bien connues pour absorber ces bruits. Ces panneaux comportent habituellement une structure à âme alvéolaire pouvant être sous la forme d'une couche alvéolaire comprenant des cellules alvéolaires (structure couramment appelée « en nid d'abeille »).

La structure à âme alvéolaire est généralement revêtue sur l'une de ses faces d'une peau imperméable à l'air, dite peau « pleine » et, sur l'autre de ses faces, d'une peau dite « acoustique », percée d'une pluralité de perçages acoustiques définissant un schéma acoustique.

De tels panneaux d'atténuation acoustique constituent des résonateurs acoustiques aptes à « piéger » le bruit et donc à atténuer les émissions sonores en direction de l'extérieur de la nacelle. Ces panneaux d'atténuation acoustique équipent des zones de la nacelle qui peuvent être, à titre d'exemple, l'entrée d'air de la nacelle, la structure interne fixe de la nacelle, dite « Inner Fixed Structure » (IFS) en anglais, entourant le coeur du turboréacteur, les volets de blocage d'un dispositif d'inversion de poussée à grilles.

Afin d'atténuer acoustiquement les basses fréquences, il est connu de réaliser un panneau d'atténuation acoustique dont sa structure à âme alvéolaire comporte une couche ou plusieurs couches alvéolaires superposées, séparées par un septum, de hauteur totale augmentée.

Toutefois, l'augmentation d'épaisseur du panneau acoustique augmente son poids, ce qui va à l'encontre de la résolution du problème technique général propre à l'aéronautique de réduction de la masse de l'aéronef.

Une autre configuration connue pour atténuer acoustiquement les basses fréquences consiste à réaliser dans chaque cellule alvéolaire de la structure à âme alvéolaire un cône, ouvert au niveau de sa base.

En prévoyant de tels cônes, on augmente la longueur du chemin parcouru par l'onde sonore qui pénètre dans le panneau acoustique, par rapport à la distance qui serait parcourue sans ces cônes, sans pour autant augmenter l'épaisseur du panneau comme c'est le cas dans les structures à âme alvéolaire à deux étages séparés par un septum. Une configuration de ce type est par exemple décrite dans les documents US 2015/0041247 A1 et US 2015/0041248 A1. Ces cônes sont mis en place dans la structure à âme alvéolaire notamment par soudage. La fabrication de ces cônes à l'intérieur des cellules alvéolaire est ainsi extrêmement complexe, et la durée nécessaire à la fabrication de la structure à âme alvéolaire est très élevée. Aussi, une structure à âme alvéolaire fabriquée par ce type de procédé de l'art antérieur est très onéreuse.

Dans les documents US 4 265 955, US 9 469 985 et US 2013/062143, des inserts acoustiques planaires sont insérés dans les cellules de la structure à âme alvéolaire. Dans le document GB 1 470 036, les cônes sont fabriqués par déformation d'une paroi qui est ensuite assemblée à la structure à âme alvéolaire, les cônes étant alors engagés dans les cellules.

La présente invention vise à s'affranchir des inconvénients ci-dessus, et concerne pour ce faire un procédé de fabrication d'une structure à âme alvéolaire pour panneau d'atténuation acoustique, ladite structure à âme alvéolaire comportant un premier bord et un deuxième bord séparés par une pluralité de cellules alvéolaires, les cellules alvéolaires comportant une pluralité de parois s'étendant entre le premier bord et le deuxième bord, chaque cellule alvéolaire définissant un conduit primaire de circulation d'une onde sonore à atténuer, ledit procédé comporte des étapes visant à :
- recouvrir au moins partiellement le premier bord de ladite structure à âme alvéolaire d'une paroi de compartimentation;
- déformer la paroi de compartimentation depuis le premier bord de façon à former un conduit secondaire de circulation de ladite onde sonore à atténuer dans au moins deux des conduits primaires, chaque conduit secondaire s'étendant au moins partiellement à l'intérieur d'un des conduits primaires;
- pratiquer au moins une ouverture au sein de ladite paroi de compartimentation de façon à mettre en communication chaque conduit secondaire avec le conduit primaire dans lequel est formé le conduit secondaire.

Ainsi, en prévoyant d'utiliser une paroi de compartimentation que l'on déforme de façon à définir au moins un conduit secondaire de circulation de l'onde sonore à atténuer s'étendant au moins partiellement à l'intérieur dudit conduit primaire, on parvient à réaliser autant de conduits de circulation secondaires que la structure alvéolaire présente de conduits de circulation primaires.

On réduit considérablement la complexité ainsi que le coût de fabrication des conduits de circulation secondaires par rapport aux solutions de l'art antérieur qui prévoient de réaliser les conduits secondaires de façon indépendante les uns des autres.

On comprend que lors de l'étape dans laquelle on recouvre au moins partiellement l'un desdits premier bord ou deuxième bord de ladite structure à âme alvéolaire d'une paroi de compartimentation, on recouvre une pluralité de cellules alvéolaires de la paroi de compartimentation.

Par exemple, on recouvre toutes les cellules alvéolaires de la structure à âme alvéolaire de la paroi de compartimentation.

On comprend que l'étape lors de laquelle on déforme la paroi de compartimentation de façon à définir au moins un conduit secondaire de circulation de ladite onde sonore à atténuer, ledit conduit secondaire s'étendant au moins partiellement à l'intérieur dudit conduit primaire, est postérieure à l'étape dans laquelle on recouvre au moins partiellement l'un desdits premier bord ou deuxième bord de ladite structure à âme alvéolaire d'une paroi de compartimentation.

Selon des caractéristiques optionnelles du procédé de fabrication de l'invention :
- la paroi de compartimentation comporte un film, déformable et expansible, et le procédé de fabrication comporte une étape supplémentaire postérieure à l'étape visant à déformer ladite paroi de compartimentation, visant à consolider ladite paroi de compartimentation dans sa position déformée ;
- en variante, le film de la paroi de compartimentation est renforcé par une structure textile, déformable et expansible ;
- l'ouverture est pratiquée dans la paroi de compartimentation antérieurement ou postérieurement ou simultanément à l'étape visant à déformer ladite paroi de compartimentation ;
- l'étape visant à déformer la paroi de compartimentation est obtenue par déformation mécanique de ladite paroi de compartimentation au moyen d'un dispositif de déformation mécanique comprenant au moins un organe de déformation conçu pour exercer une pression ou une traction sur l'une des faces de la paroi de compartimentation ;
- l'ouverture est pratiquée dans la paroi de compartimentation simultanément à l'étape visant à déformer ladite paroi de compartimentation et ladite ouverture est pratiquée au moyen d'un poinçon monté sur l'organe de déformation du dispositif de déformation mécanique ;
- en variante, l'étape visant à déformer la paroi de compartimentation est obtenue par application d'une pression différentielle de part et d'autre de ladite paroi de compartimentation;
- selon une disposition commune, la paroi de compartimentation adopte dans sa position déformée une forme d'ogive, conique ou tronconique.

La structure à âme alvéolaire pour panneau d'atténuation acoustique, obtenue à partir du procédé de fabrication selon l'invention, est remarquable en ce que la paroi de compartimentation déformée repose sur le premier bord de la structure à âme alvéolaire.

La panneau d'atténuation acoustique ainsi obtenu comporte une peau acoustique percée d'une pluralité de perçages acoustiques définissant un schéma acoustique, une peau pleine et une structure à âme alvéolaire, disposée entre ladite peau acoustique et ladite peau pleine.

D'autres caractéristiques et avantages de l'invention apparaîtront à la lecture de la description détaillée qui suit pour la compréhension de laquelle on se reportera aux dessins annexés dans lesquels :
[Fig. 1] illustre la structure alvéolaire selon l'invention, en cours de fabrication.
[Fig. 2] représente la structure alvéolaire obtenue par le procédé de fabrication selon l'invention.
[Fig. 3] illustre un panneau d'atténuation acoustique selon l'invention, en vue éclatée.
[Fig. 4] illustre le panneau acoustique de la figure 3 en coupe longitudinale partielle.
[Fig. 5] représente un premier mode de réalisation du procédé de fabrication selon l'invention.
[Fig. 6] représente un deuxième mode de réalisation du procédé de fabrication selon l'invention.
[Fig. 7] illustre une première variante d'exécution d'une première réalisation de l'étape visant à déformer la paroi de compartimentation.
[Fig. 8] illustre une deuxième variante d'exécution de la première réalisation de l'étape visant à déformer la paroi de compartimentation.
[Fig. 9] montre une première variante d'exécution de l'étape visant à pratiquer une ouverture au sein de la paroi de compartimentation.
[Fig. 10] montre une deuxième variante d'exécution de l'étape visant à pratiquer une ouverture au sein de la paroi de compartimentation.
[Fig. 11] représente selon une première configuration l'installation d'une paroi de compartimentation dans un panneau d'atténuation acoustique selon l'invention.
[Fig. 12] représente selon une deuxième configuration l'installation d'une paroi de compartimentation dans un panneau d'atténuation acoustique selon l'invention.
[Fig. 13] donne un premier exemple de réalisation d'une cellule alvéolaire d'une structure à âme alvéolaire selon l'invention.
[Fig. 14] donne un deuxième exemple de réalisation d'une cellule alvéolaire d'une structure à âme alvéolaire selon l'invention.

Sur l'ensemble des figures, des références identiques ou analogues représentent des organes ou ensembles d'organes identiques ou analogues.

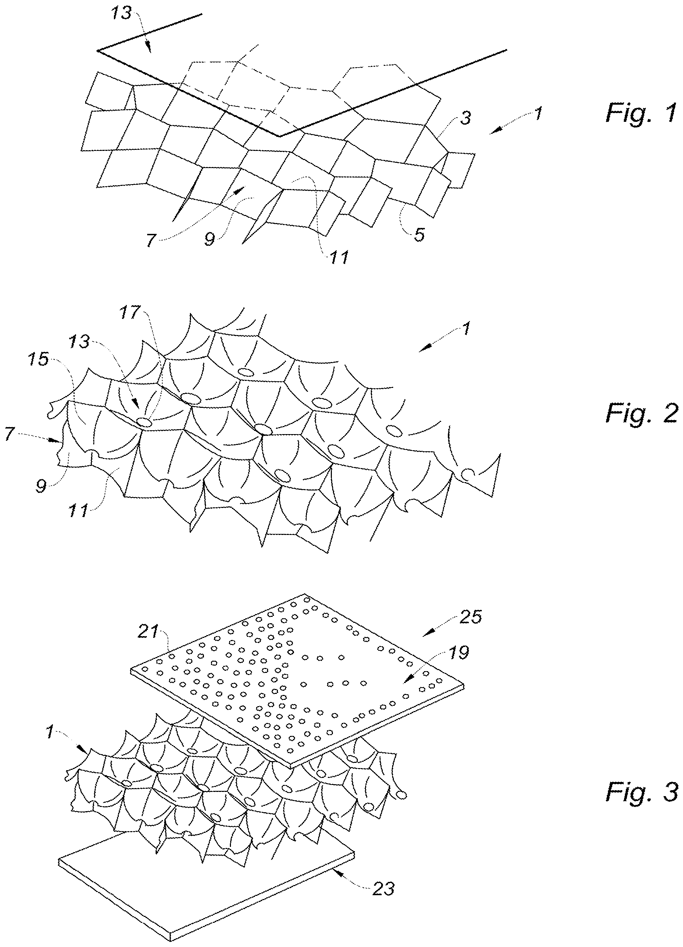

On se réfère aux figures 1 et 2 illustrant une structure à âme alvéolaire 1 respectivement en cours de fabrication et dans sa configuration telle qu'obtenue après application du procédé de fabrication de l'invention.

La structure à âme alvéolaire comporte un premier bord 3 et un deuxième bord 5 séparés par une pluralité de cellules alvéolaires 7.

Une cellule alvéolaire 7 comporte de façon connue une pluralité de parois 9, qui s'étendent transversalement entre le premier bord 3 et le deuxième bord 5 de la structure à âme alvéolaire. Les parois 9 de la cellule alvéolaire 7 s'étendent depuis le premier bord 3 jusqu'au deuxième bord 5 de la structure à âme alvéolaire 1. Les parois 9 définissent un conduit primaire 11 de circulation d'une onde sonore à atténuer, provenant d'une source sonore. A titre d'exemple, la source sonore émettant des ondes sonores à atténuer peut être constituée par un turboréacteur d'un ensemble propulsif d'aéronef.

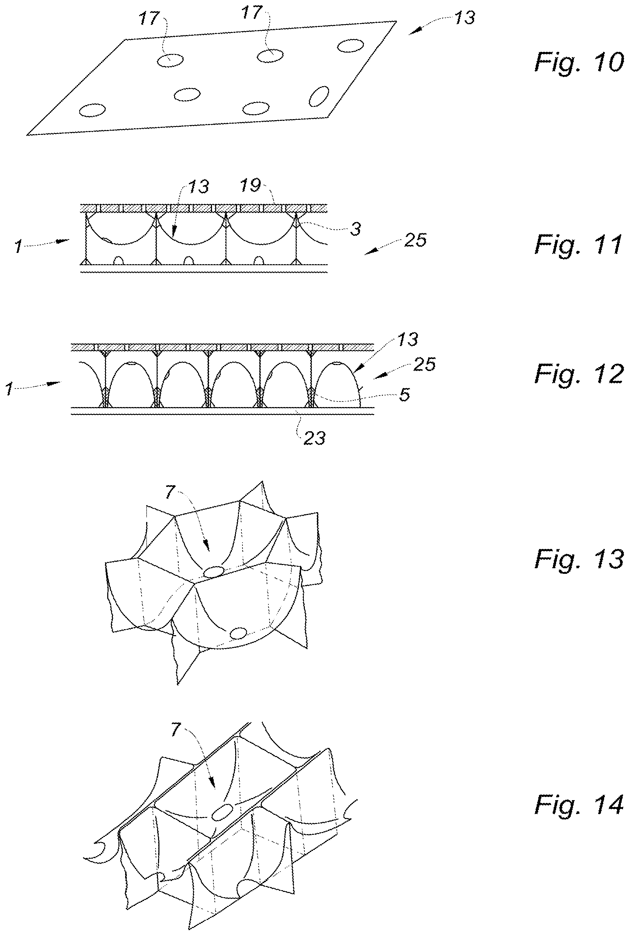

Selon une première étape du procédé de fabrication de l'invention, le premier bord 3 de la structure à âme alvéolaire 1, en position déployée telle qu'illustrée à la figure 1, est recouverte totalement ou partiellement d'une paroi dite de compartimentation 13. Selon une alternative (représentée figure 12), la paroi de compartimentation recouvre partiellement ou totalement non pas le premier bord 3 de la structure à âme alvéolaire, mais son deuxième bord 5.

La paroi de compartimentation 13 peut encore être appelée « septum » en raison de sa fonction dans la structure alvéolaire, com me on va le voir dans la suite de la description. Selon une deuxième étape du procédé de fabrication de l'invention, la paroi de compartimentation 13 est déformée de façon à définir un conduit secondaire 15 (visible à la figure 2) de circulation de l'onde sonore à atténuer. Le conduit secondaire 15 s'étend au moins en partie à l'intérieur du conduit primaire 11 défini par les parois 9 de la cellule alvéolaire 7. Le conduit secondaire ainsi obtenu par la paroi de compartimentation 13 définit en quelque sorte un septum dans la cellule alvéolaire 7. Selon une troisième étape du procédé de fabrication de l'invention, qui peut être réalisée avant, pendant ou après l'étape visant à déformer la paroi de compartimentation 13, on pratique au moins une ouverture 17 au sein de la paroi de compartimentation 13. On crée alors une communication entre le conduit primaire 11 et le conduit secondaire 15.

On obtient alors une structure alvéolaire 1 dite « à conduits secondaires » ou « à cônes » ou « à conduits tronconiques » ou « à ogives » telle que représentée à la figure 2, en référence à la forme géométrique que la paroi de compartimentation 13 adopte dans sa position déformée.

On se réfère à la figure 3. La structure à âme alvéolaire 1 ainsi fabriquée est destinée à être revêtue au niveau de l'un de ses bords, par exemple le premier bord 3 comme illustré à la figure 3, d'une peau perméable acoustiquement 19, peau qui est percée d'une pluralité de perçages acoustiques 21 définissant un schéma acoustique, et sur l'autre de ses bords, par exemple le deuxième bord 5, d'une peau pleine 23, peau qui est réfléchissante aux ondes acoustiques. L'ensemble ainsi formé par la structure alvéolaire 1 prise en sandwich entre la peau acoustique 19 et la peau pleine 23 forme un panneau d'atténuation acoustique 25 représenté à la figure 3 en vue éclatée.

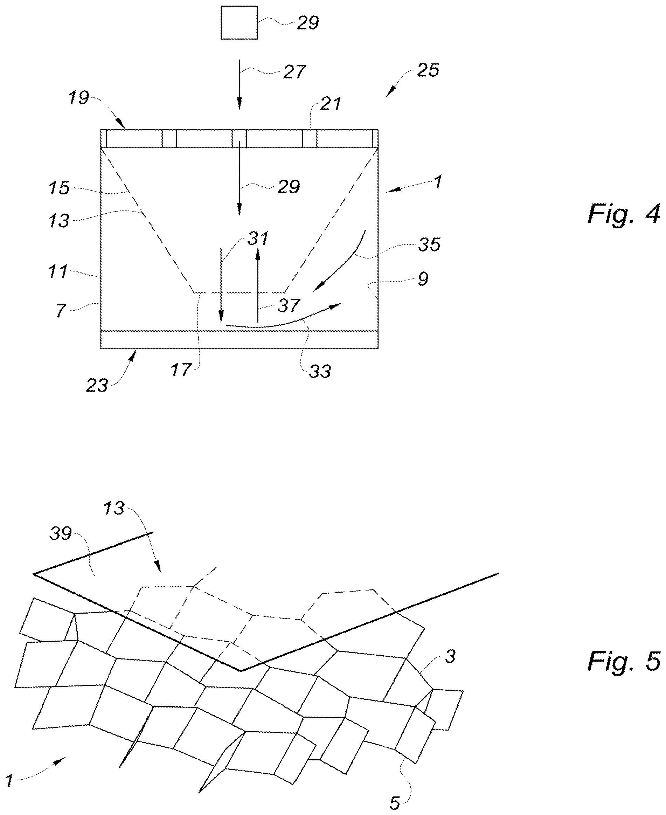

On se réfère à la figure 4 illustrant une vue en coupe longitudinale partielle du panneau d'atténuation acoustique 25 de la figure 3, monté dans un environnement dans lequel une source sonore 29, par exemple un turboréacteur d'aéronef, émet des ondes sonores 27 à atténuer.

L'onde sonore 27 pénètre dans la cellule alvéolaire 7 au travers des perçages acoustiques 21 pratiqués dans la peau acoustique 19 (flèche 29).

L'onde sonore traverse le conduit secondaire 15 défini par la paroi de compartimentation 13, puis elle sort du conduit secondaire 15 grâce à l'ouverture 17 pratiquée dans la paroi de compartimentation 13 (flèche 31).

L'onde sonore pénètre alors à l'intérieur du conduit primaire 11 avant d'être tout d'abord réfléchie par la peau pleine 23 (flèche 33) puis par la paroi 9 de la cellule alvéolaire 7 (flèche 35).

Le chemin parcouru par l'onde sonore 27 est alors augmenté par rapport au chemin parcouru par une onde sonore dans un panneau d'atténuation acoustique qui ne comporterait pas de tels conduits secondaires, sans toutefois augmenter l'épaisseur de la structure à âme alvéolaire, comme c'est le cas dans certaines configurations de l'art antérieur utilisant un septum de séparation entre deux couches de structure à âme alvéolaire.

En augmentant la distance parcourue par l'onde sonore, l'intensité sonore de l'onde diminue. L'onde sonore 27 atténuée ressort ensuite par l'ouverture 17 du conduit secondaire (flèche 37).

Grâce à une telle structure à âme alvéolaire, on améliore la performance d'atténuation acoustique, notamment des basses fréquences.

Grâce au procédé de fabrication de l'invention, en prévoyant d'utiliser une paroi de compartimentation d'un seul tenant, que l'on vient déformer de façon à former un conduit de circulation secondaire à l'intérieur d'un conduit de circulation primaire défini par les parois d'une cellule alvéolaire, on réduit considérablement la complexité de fabrication des conduits de circulation secondaires par rapport aux solution de l'art antérieur qui prévoient des conduits secondaires, à l'intérieur des conduits primaires, obtenus de façon indépendante les uns des autres.

Aussi, le coût de fabrication de ce type de structures à âme alvéolaire « à conduits secondaires » s'en trouve largement réduit par rapport à l'art antérieur.

Selon un premier mode de réalisation du procédé de fabrication de l'invention, illustré a la figure 5, la paroi de compartimentation 13 est constituée par un film 39 déformable et expansible, apte à être solidifié.

Selon une réalisation préférée, le film 39 est constitué par un matériau organique de type thermodurcissable, thermoplastique ou élastomère.

Le film 39 présente selon une première variante d'exécution un grand allongement à la rupture, par exemple compris entre environ 10% et environ 300%. C'est le cas par exemple des films de polyuréthane ou des élastomères.

Le film 39 présente selon une deuxième variante d'exécution un faible allongement à la rupture, par exemple de l'ordre de quelques pour cent. C'est le cas par exemple des films obtenus à partir de résines époxydes ou phénoliques polymérisées.

Le procédé de fabrication selon l'invention comporte une étape supplémentaire postérieure à l'étape visant à déformer la paroi de compartimentation 13 constituée par le film 39, visant à consolider la paroi de compartimentation dans sa position déformée.

Dans le cas d'un film 39 constitué par un matériau thermodurcissable ou élastomère, le film n'est réticulé qu'après que l'étape de déformation et de consolidation de la paroi de compartimentation constituée par le film 39 sont accomplies.

Le film est ainsi réticulé lorsque la paroi de compartimentation se trouve dans sa position déformée selon laquelle elle définit au moins un conduit secondaire s'étendant au moins en partie à l'intérieur d'au moins un conduit primaire.

Dans le cas d'un film 39 obtenu par un matériau thermoplastique, le film est tout d'abord fluidifié thermiquement après qu'il recouvre au moins partiellement l'un des bords 3, 5 de la structure à âme alvéolaire 1, ceci afin d'autoriser sa déformation. Une fois que l'étape visant à déformer la paroi de compartimentation constituée par le film 39 est accomplie, on réalise l'étape visant à consolider la paroi de compartimentation dans sa position déformée.

Selon une autre réalisation du film 39, celui-ci est constitué par un matériau inorganique, par exemple un matériau métallique ou céramique. Aucune étape visant à consolider la paroi de compartimentation 13 après que l'étape visant à la déformer à été accomplie n'est alors nécessaire.

L'étape du procédé de fabrication de l'invention visant à recouvrir l'un des bords de la structure à âme alvéolaire par la paroi de compartimentation définie par le film 39 est accomplie en installant le film 39 sur un bord de la structure à âme alvéolaire 1 seule. En variante, cette étape peut être accomplie lorsque la structure à âme alvéolaire est déjà collée à l'une des peaux du panneau d'atténuation acoustique.

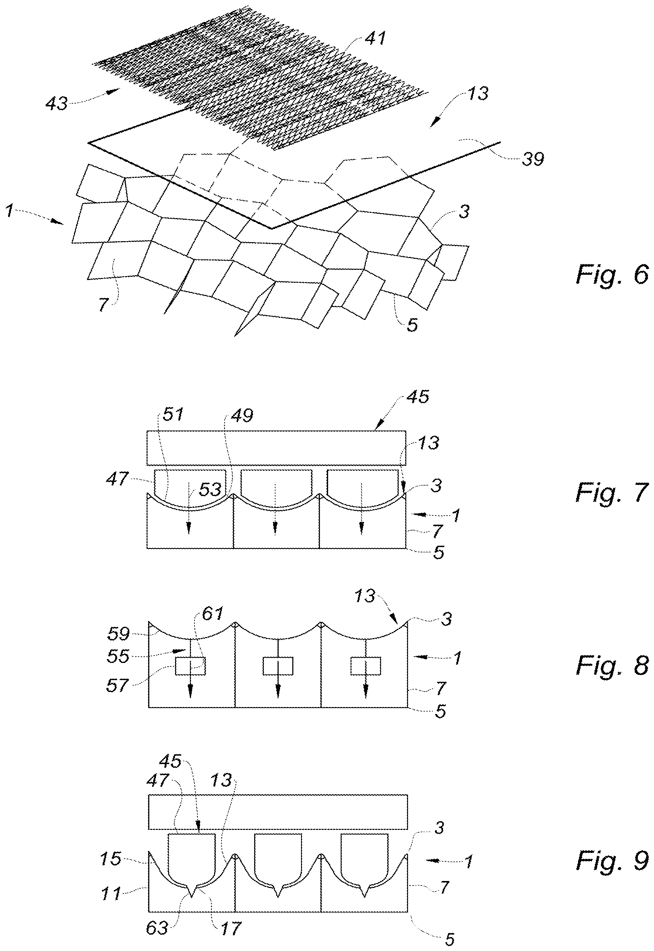

Selon un deuxième mode de réalisation du procédé de fabrication de l'invention, illustré à la figure 6, la paroi de compartimentation 13 est constituée par le film 39 déformable et expansible, apte à être solidifié, renforcé par une structure textile 41 également déformable et expansible. La structure textile est par exemple choisie de façon à présenter une capacité d'allongement comprise entre environ 100% et environ 400% de sa longueur au repos.

Selon ce deuxième mode de réalisation, le film 39 constitue une matrice du matériau composite 43 formé par le film ou matrice 39 et par la structure textile 41.

Lorsque le film ou matrice 39 est réalisé dans un matériau thermoplastique, la matrice est fluidifiée thermiquement avant de recouvrir au moins en partie l'un des bords 3, 5 de la structure à âme alvéolaire 1. Une fois que la matrice 39 fluidifiée imprègne la structure textile 41, la matrice 39 est expansée et le matériau composite 43, définissant la paroi de compartimentation 13, est déformé de façon à définir au moins un conduit secondaire s'étendant au moins en partie à l'intérieur du conduit primaire.

En variante, la matrice 39 est préalablement mixée avec la structure textile 41, de façon à former un matériau composite 43 pré-imprégné. Le matériau composite 43, définissant la paroi de compartimentation 13, est ensuite déformé de façon à définir au moins un conduit secondaire s'étendant au moins en partie à l'intérieur du conduit primaire.

Lorsque le film ou matrice 39 est réalisé dans un matériau thermodurcissable ou élastomère, la matrice n'est réticulée qu'après infiltration de la structure textile 41 par la matrice.

Le procédé de fabrication de l'invention comporte une étape supplémentaire postérieure à l'étape visant à déformer la paroi de compartimentation 13, ici définie par le matériau composite 43, visant à consolider la paroi de compartimentation dans sa position déformée.

Préférentiellement, la structure textile 41 de renforcement du film 39 a une texture telle que sa capacité d'allongement est finie sous l'effet de la déformation appliquée. Son amplitude est définie en fonction de la dimension des cellules alvéolaires 7 de la structure à âme alvéolaire à fabriquer, pour former dans chaque cellule alvéolaire une forme de cloche.

Aussi, la structure textile 41 est élastique. Son élasticité est obtenue d'une part à partir de fibres textiles élastiques et d'autre part grâce au type de maillage réalisé. La structure textile présente à cet effet un maillage de fibres continues liées entre elles par motif tricot ou crochet.

Selon une autre réalisation, le maillage est continu par rangées liées maille à maille. Selon encore une autre réalisation, le maillage est de type discontinu ou filet et lié par groupe de mailles.

Les fibres de la structure textile 41 sont réalisées dans un matériau organique tel que le nylon, les polyesters, les polyamides.

En variante, les fibres sont réalisées dans un matériau métallique ou minéral.

L'étape du procédé de fabrication de l'invention visant à recouvrir l'un des bords de la structure à âme alvéolaire par la paroi de compartimentation définie par le film ou matrice 39 renforcé par la structure textile 41 est accomplie en installant le film ou matrice 39 renforcé par la structure textile 41 sur un bord de la structure à âme alvéolaire 1 seule. En variante, cette étape peut être accomplie lorsque la structure à âme alvéolaire est déjà collée à l'une des peaux du panneau d'atténuation acoustique.

On se réfère aux figures 7 et 8 illustrant une première variante d'exécution de l'étape visant à déformer la paroi de compartimentation 13 de façon à définir au moins un conduit secondaire 15 de circulation de l'onde sonore à atténuer.

L'étape visant ä déformer la paroi de compartimentation 13 peut être obtenue par déformation mécanique de la paroi de compartimentation 13 constituée par le film 39 ou par le film ou matrice 39 renforcé par la structure textile 41.

Selon une première réalisation représentée à la figure 7, la déformation mécanique peut être obtenue grâce à un dispositif de déformation mécanique 45 comportant une pluralité d'organes de déformation 47 conçus pour exercer une pression sur une face 49 de la paroi de compartimentation 13.

L'organe de déformation 47 consiste en un bloc présentant une face inférieure 51 incurvée destinée à donner la forme souhaitée à la paroi de compartimentation 13.

A cet effet, l'organe de déformation 47 est dimensionné de façon à pouvoir pénétrer à l'intérieur de la cellule alvéolaire 7.

Lors de l'activation du dispositif de déformation mécanique 45, les organes de déformation 47 se déplacent selon les flèches 53, pour pousser la paroi de compartimentation 13 initialement disposée à plat sur le bord 3 de la structure à âme alvéolaire 1 vers le bord 5 des cellules alvéolaires 7.

Selon une deuxième réalisation représentée à la figure 8, la déformation mécanique peut être obtenue grâce à un dispositif de déformation mécanique 55 comportant une pluralité d'organes de déformation 57 qui sont chacun reliés à une face 59 de la paroi de compartimentation 13 qui se trouve à l'intérieur de la structure à âme alvéolaire lorsque la paroi de compartimentation 13 est positionnée sur la structure à âme alvéolaire 1.

L'activation du dispositif de déformation mécanique 55 entraîne un déplacement des organes de déformation 57, selon les flèches 61, lesquels organes exerçant alors une traction sur la paroi de compartimentation 13 déformant ainsi ladite paroi vers le bord 5 de la structure à âme alvéolaire 1 opposé au bord 3 sur quel ladite paroi de compartimentation est initialement disposée.

Selon une disposition commune aux première et deuxième réalisations du dispositif de déformation mécanique, les organes de déformation 47, 57 fonctionnent de préférence de manière synchrone, ce qui permet de déformer la paroi de compartimentation 13 dans les cellules alvéolaires de façon simultanée. Cela permet de déformer la paroi de compartimentation 13 en une seule étape.

En variante, les organes de déformation 47, 57 peuvent fonctionner de manière asynchrone, ce qui permet de déformer la paroi de compartimentation 13 dans les cellules alvéolaires de façon non simultanée. Cela peut présenter un intérêt lorsque la forme que l'on souhaite donner à la paroi de compartimentation une fois déformée varie d'une cellule alvéolaire à une autre.

Selon une deuxième variante d'exécution non représentée, l'étape visant à déformer la paroi de compartimentation est obtenue par application d'une pression différentielle de part et d'autre de la paroi de compartimentation.

Selon une première réalisation, l'application d'une pression différentielle sur la paroi de compartimentation est obtenue en ménageant deux volumes distincts cloisonnés et aptes à être pressurisés, de part et d'autre de la paroi de compartimentation.

Le film 39 déformable et expansible peut être utilisé pour cloisonner de la sorte les volumes définis de part et d'autre de la paroi de compartimentation.

Lorsque le film 39 est renforcé par la structure textile 41, le film 39 doit être choisi de façon à conserver une viscosité suffisante lors de l'étape de déformation du procédé, ceci afin de continuer à former avec la structure textile 41 une barrière étanche.

En alternative, une membrane étanche déformable appliquée le long de la paroi de compartimentation peut être installée en complément du film 39. La membrane étanche est choisie de sorte à être non adhérente au film 39. La membrane étanche est éliminée à la fin de l'étape de déformation.

Selon une deuxième réalisation, l'application d'une pression différentielle sur la paroi de compartimentation 13 est obtenue en formant une dépression exercée du côté de la face 59 (visible à la figure 8) de la paroi de compartimentation. La dépression peut être obtenue par tirage de vide d'air partiel, le niveau de dépression variant suivant les paramètres géométriques et les matériaux utilisés.

Selon une troisième réalisation, l'application d'une pression différentielle sur la paroi de compartimentation 13 est obtenue par soufflage de fluide pressurisé sur la face 49 (visible à la figure 7) du film 39 de la paroi de compartimentation 13.

Selon une troisième variante d'exécution non représentée, l'étape visant à déformer la paroi de compartimentation est obtenue par un procédé dit de « spinforming » ou par un procédé de « centrifugation forming », procédé selon lequel on fait tourner la structure à âme alvéolaire, entraînant une déformation de la paroi de compartimentation par force centrifuge.

Selon une quatrième variante d'exécution non représentée, l'étape visant à déformer la paroi de compartimentation est obtenue par déformation magnétique ou déformation électromagnétique.

Selon une disposition commune applicable à l'ensemble des variantes d'exécution visant à réaliser l'étape de déformation de la paroi de compartimentation 13 dans la cellule alvéolaire 7, la déformation de la paroi de compartimentation est appliquée jusqu'à obtenir la consolidation de ladite paroi de compartimentation, du moins lorsque le film 39 de ladite paroi nécessite une consolidation, comme c'est le cas lorsqu'il est constitué dans un matériau organique.

On se réfère à la figure 9 illustrant une première variante d'exécution de l'étape visant à pratiquer une ouverture 17 au sein de la paroi de compartimentation 13 de façon à permettre une communication entre le conduit primaire 11 et le conduit secondaire 15. Selon cette première variante, l'ouverture est pratiquée dans la paroi de compartimentation 13 simultanément à l'étape visant à déformer la paroi de compartimentation.

L'ouverture 17 peut être obtenue en montant un poinçon 63 sur l'organe de déformation 47 du dispositif de déformation mécanique 45. Ainsi, par déplacement de l'organe de déformation 47, le poinçon 63 pratique une ouverture dans la paroi de compartimentation 13.

Selon une alternative non représentée, il peut être envisagé d'utiliser un dispositif de perçage externe, qui peut être utilisé quelle que soit la méthode de déformation mise en oeuvre et quel que soit le mode de réalisation de la paroi de compartimentation 13 retenu. Pour ce faire, le dispositif de perçage externe peut comporter par exemple un poinçon monté sur un bras automatisé, ou consister en un dispositif d'emboutissage ou en un dispositif de découpage laser.

Le dispositif de perçage est en outre conçu pour permettre de positionner les ouvertures 17 à des emplacements distincts d'une cellule alvéolaire à l'autre, en fonction des écarts géométriques des cellules alvéolaires.

On se réfère à la figure 10 illustra nt une deuxième va riante d'exécution de l'étape visant à pratiquer des ouvertures 17 au sein de la paroi de compartimentation 13 de façon à permettre une communication entre le conduit primaire et le conduit secondaire.

Selon cette deuxième variante, l'ouverture est pratiquée dans la paroi de compartimentation 13 antérieurement à l'étape visant à déformer ladite paroi.

Cette variante est également applicable quelle que soit la méthode de déformation mise en oeuvre et quel que soit le mode de réalisation de la paroi de compartimentation 13 retenu.

A titre d'exemple, lorsque la paroi de compartimentation 13 comporte un film ou matrice renforcé par la structure textile, la structure textile est liée de façon à prévoir des ouvertures 17 qui ne sont pas enduites de film ou matrice.

Aussi, le maillage de la structure textile peut être organisé afin de créer, par allongement des mailles de liaison entre elles, les ouvertures 17 dans la paroi de compartimentation 13.

Le positionnement des ouvertures 17 sur la paroi de compartimentation peut être choisi de façon à ce que les ouvertures présentent un positionnement dans la cellule alvéolaire pouvant varier d'une cellule alvéolaire à l'autre, en fonction des écarts géométriques des cellules alvéolaires.

Selon une troisième variante d'exécution non représentée de l'étape visant à pratiquer une ouverture au sein de la paroi de compartimentation de façon à permettre une communication entre le conduit primaire et le conduit secondaire, l'ouverture est pratiquée dans la paroi de compartimentation postérieurement à l'étape visant à déformer ladite paroi de compartimentation.

L'ouverture peut être obtenue par utilisation d'un dispositif de perçage externe qui peut être utilisé quelle que soit la méthode de déformation mise en oeuvre et quel que soit le mode de réalisation de la paroi de compartimentation retenu.

Pour ce faire, le dispositif de perçage externe peut comporter par exemple un poinçon monté sur un bras automatisé, ou consister en un dispositif d'emboutissage ou en un dispositif de découpage laser.

Le dispositif de perçage est également conçu pour permettre de positionner les ouvertures à des emplacements distincts d'une cellule alvéolaire à l'autre, en fonction des écarts géométriques des cellules alvéolaires.

Selon une disposition commune applicable à l'ensemble des variantes d'exécution visant à réaliser l'étape visant à pratiquer une ouverture au sein de la paroi de compartimentation de façon à permettre une communication entre le conduit primaire et le conduit secondaire, l'ouverture peut être pratiquée au niveau d'un sommet de la paroi de compartimentation déformée de façon à former une ouverture sommitale. Lorsque la paroi de compartimentation déformée adopte une forme de cône dans une cellule alvéolaire, on obtient après avoir pratiqué l'ouverture une paroi de compartimentation tronconique dans la cellule alvéolaire. Une ouverture peut également être pratiquée, à la place de ou en complément de l'ouverture sommitale, au niveau d'une paroi latérale de la paroi de compartimentation. Quel que soit l'emplacement de l'ouverture, celle-ci définit un col acoustique qui permet de laisser passer une onde sonore entre les conduits primaire et secondaire.

On se réfère aux figures 11 et 12 donnant deux exemples de représentation d'une paroi de compartimentation 13 installée dans un panneau d'atténuation acoustique 25 comportant la structure à âme alvéolaire 1 obtenue selon le procédé de fabrication de l'invention.

Comme représenté à la figure 11, la paroi de compartimentation 13 vient en appui sur le premier bord 3 de la structure à âme alvéolaire 1, bord sur lequel est montée la peau acoustique 19. L'adhésion est obtenue grâce à la diffusion du film qui adhère au clinquant de la structure à âme alvéolaire. La paroi de compartimentation 13 est en quelque sorte ancrée au niveau du bord 3, c'est-à-dire du côté de la peau acoustique 19.

Selon une variante représentée à la figure 12, la paroi de compartimentation 13 vient en appui sur le deuxième bord 5 de la structure à âme alvéolaire 1, bord sur lequel est montée la peau pleine 23. L'adhésion est également obtenue grâce à la diffusion du film qui adhère au clinquant de la structure à âme alvéolaire et la paroi de compartimentation 13 est en quelque sorte ancrée au niveau du bord 5, c'est-à-dire du côté de la peau pleine 23.

On se réfère aux figures 13 et 14 donnant deux exemples de géométrie de cellules alvéolaires 7 d'une structure à âme alvéolaire 1 obtenue selon le procédé de fabrication de l'invention. A titre d'exemple non limitatif, les cellules alvéolaires peuvent adopter une forme d'hexagone comme représenté à la figure 13 ou de quadrilatère comme représenté à la figure 14. Bien entendu, les cellules alvéolaires peuvent adopter une forme polygonale autre que celles représentées, circulaire, elliptique.

Le panneau d'atténuation acoustique obtenu en montant de part et d'autre de la structure à âme alvéolaire une peau pleine et une peau acoustique peut, notamment mais non limitativement, équiper un aéronef, en particulier un ensemble propulsif pour aéronef, plus particulièrement une nacelle pour turboréacteur d'aéronef, et encore plus particulièrement une zone de la nacelle qui peut être l'entrée d'air de la nacelle, la structure interne fixe de la nacelle, les volets de blocage d'un dispositif d'inversion de poussée à grilles.

Comme il va de soi, la présente invention ne se limite pas aux seules formes de réalisation de ce procédé de fabrication, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention défini par les revendications.

## Revendications

1. Procédé de fabrication d'une structure à âme alvéolaire (1) pour panneau d'atténuation acoustique (25), la structure à âme alvéolaire (1) comportant un premier bord (3) et un deuxième bord (5) séparés par une pluralité de cellules alvéolaires (7), les cellules alvéolaires (7) comportant chacune une pluralité de parois (9) s'étendant entre le premier bord (3) et le deuxième bord (5), chaque cellule alvéolaire définissant un conduit primaire (11) de circulation d'une onde sonore (27) à atténuer, ledit procédé comportant une étape visant à :
- recouvrir au moins partiellement le premier bord de la structure à âme alvéolaire (1) d'une paroi de compartimentation (13) ; le procédé étant **caractérisé en ce qu'**il comporte des étapes visant à:
- déformer la paroi de compartimentation (13) depuis le premier bord de façon à former un conduit secondaire (15) de circulation de la onde sonore (27) à atténuer dans au moins deux des conduits primaires, chaque conduit secondaire (15) s'étendant au moins partiellement à l'intérieur d'un des conduits primaires (11) ;
- pratiquer au moins une ouverture (17) au sein de la paroi de compartimentation (13) de façon à mettre en communication chaque conduit secondaire avec le conduit primaire (11) dans lequel est formé le conduit secondaire (15).

2. Procédé de fabrication selon la revendication 1, **caractérisé en ce que** la paroi de compartimentation (13) comporte un film (39), déformable et expansible, le procédé comportant une étape supplémentaire postérieure à l'étape visant à déformer la paroi de compartimentation (13), l'étape supplémentaire visant à consolider la paroi de compartimentation (13) dans sa position déformée.

3. Procédé de fabrication selon la revendication 2, **caractérisé en ce que** le film (39) de la paroi de compartimentation (13) est renforcé par une structure textile (41), déformable et expansible.

4. Procédé de fabrication selon l'une quelconque des revendications 1 à 3, **caractérisé en ce que** l'ouverture (17) est pratiquée dans la paroi de compartimentation (13) antérieurement ou postérieurement ou simultanément à l'étape visant à déformer la paroi de compartimentation (13).

5. Procédé de fabrication selon l'une quelconque des revendications 1 à 4, **caractérisé en ce que** l'étape visant à déformer la paroi de compartimentation (13) est obtenue par déformation mécanique de la paroi de compartimentation (13) au moyen d'un dispositif de déformation mécanique (45, 55) comprenant au moins un organe de déformation (47, 57) conçu pour exercer une pression ou une traction sur l'une des faces (49, 59) de la paroi de compartimentation (13).

6. Procédé de fabrication selon la revendication 5, **caractérisé en ce que** l'ouverture (17) est pratiquée dans la paroi de compartimentation (13) simultanément à l'étape visant à déformer la paroi de compartimentation (13) et **en ce que** l'ouverture (17) est pratiquée au moyen d'un poinçon (63) monté sur l'organe de déformation (47) du dispositif de déformation mécanique (45).

7. Procédé de fabrication selon l'une quelconque des revendications 1 à 4, **caractérisé en ce que** l'étape visant à déformer la paroi de compartimentation (13) est obtenue par application d'une pression différentielle de part et d'autre de la paroi de compartimentation (13).

8. Procédé de fabrication selon l'une quelconque des revendications 1 à 7, **caractérisé en ce que** la paroi de compartimentation (13) adopte dans sa position déformée une forme d'ogive, conique ou tronconique.

## Patentansprüche

1. Verfahren zum Herstellen einer Wabenkernstruktur (1) für eine Schalldämmplatte (25), wobei die Wabenkernstruktur (1) einen ersten Rand (3) und einen zweiten Rand (5) umfasst, die durch eine Vielzahl von Wabenzellen (7) getrennt sind, wobei die Wabenzellen (7) jeweils eine Vielzahl von Wänden (9) umfasst, die sich zwischen dem ersten Rand (3) und dem zweiten Rand (5) erstrecken, wobei jede Wabenzelle einen primären Kanal (11) für die Zirkulation einer zu dämpfenden Schallwelle (27) definiert, wobei das Verfahren einen folgenden Schritt umfasst:
- Bedecken mindestens teilweise des ersten Rands der Wabenkernstruktur (1) mit einer Kompartimentierungswand (13); wobei das Verfahren **dadurch gekennzeichnet ist, dass** es die folgenden Schritte umfasst:
- Verformen der Kompartimentierungswand (13) von dem ersten Rand aus, um einen sekundären Kanal (15) für die Zirkulation der zu dämpfenden Schallwelle (27) in mindestens zwei der primären Kanäle zu bilden, wobei sich jeder sekundäre Kanal (15) mindestens teilweise im Inneren der primären Kanäle (11) erstreckt;
- Vorsehen mindestens einer Öffnung (17) innerhalb der Kompartimentierungswand (13), um jeden sekundären Kanal mit dem primären Kanal (11), in dem der sekundäre Kanal (15) ausgebildet ist, in Verbindung zu bringen.

2. Herstellungsverfahren nach Anspruch 1, **dadurch gekennzeichnet, dass** die Kompartimentierungswand (13) eine verformbare und ausdehnbare Folie (39) umfasst, wobei das Verfahren nach dem Schritt des Verformens der Kompartimentierungswand (13) einen zusätzlichen Schritt des Verfestigens der Kompartimentierungswand (13) in ihrer verformten Position umfasst.

3. Herstellungsverfahren nach Anspruch 2, **dadurch gekennzeichnet, dass** die Folie (39) der Kompartimentierungswand (13) durch eine verformbare und dehnbare Textilstruktur (41) verstärkt wird.

4. Herstellungsverfahren nach einem der Ansprüche 1 bis 3, **dadurch gekennzeichnet, dass** die Öffnung (17) in der Kompartimentierungswand (13) vor oder nach oder gleichzeitig mit dem Schritt des Verformens der Kompartimentierungswand (13) vorgesehen wird.

5. Herstellungsverfahren nach einem der Ansprüche 1 bis 4, **dadurch gekennzeichnet, dass** der Schritt des Verformens der Kompartimentierungswand (13) durch eine mechanische Verformung der Kompartimentierungswand (13) mittels einer mechanischen Verformungsvorrichtung (45, 55) erreicht wird, die mindestens ein Verformungselement (47, 57) umfasst, das dazu ausgebildet ist, einen Druck oder eine Traktion auf eine der Flächen (49, 59) der Kompartimentierungswand (13) auszuüben.

6. Herstellungsverfahren nach Anspruch 5, **dadurch gekennzeichnet, dass** die Öffnung (17) in der Kompartimentierungswand (13) gleichzeitig mit dem Schritt des Verformens der Kompartimentierungswand (13) vorgesehen wird und dass die Öffnung (17) mittels einer Stanze (63) vorgesehen wird, die an dem Verformungselement (47) der mechanischen Verformungsvorrichtung (45) montiert ist.

7. Herstellungsverfahren nach einem der Ansprüche 1 bis 4, **dadurch gekennzeichnet, dass** der Schritt des Verformens der Kompartimentierungswand (13) durch Anlegen eines Differenzdrucks auf beiden Seiten der Kompartimentierungswand (13) erreicht wird.

8. Herstellungsverfahren nach einem der Ansprüche 1 bis 7, **dadurch gekennzeichnet, dass** die Kompartimentierungswand (13) in ihrer verformten Position eine spitzbogenartige, konische oder kegelstumpfförmige Form annimmt.

## Claims

1. A method for manufacturing an alveolar core structure (1) for an acoustic attenuation panel (25), the alveolar core structure (1) comprising a first edge (3) and a second edge (5) separated by a plurality of alveolar cells (7), the alveolar cells (7) each comprising a plurality of walls (9) extending between the first edge (3) and second edge (5), each alveolar cell defining a primary duct (11) for circulating a sound wave (27) to be attenuated, said method comprising a step aiming at:
- at least partially covering the first edge of the alveolar core structure (1) with a compartmentalization wall (13); the method being **characterized in that** it comprises steps aiming at:
- deforming the compartmentalization wall (13) from the first edge so as to form a secondary duct (15) for circulating the sound wave (27) to be attenuated in at least two primary ducts, each secondary duct (15) extending at least partially inside one of the primary ducts (11);
- making at least one opening (17) within the compartmentalization wall (13) so as to enable communication between each secondary duct and the primary duct (11) in which is formed the secondary duct (15).

2. The manufacturing method according to claim 1, **characterized in that** the compartmentalization wall (13) comprises a film (39), deformable and expandable, the method comprising an additional step subsequent to the step aiming at deforming the compartmentalization wall (13), the additional step aiming at consolidating the compartmentalization wall (13) in its deformed position.

3. The manufacturing method according to claim 2, **characterized in that** the film (39) of the compartmentalization wall (13) is reinforced by a deformable and expandable textile structure (41).

4. The manufacturing method according to any one of claims 1 to 3, **characterized in that** the opening (17) is made in the compartmentalization wall (13) before or after or simultaneously with the step aiming at deforming the compartmentalization wall (13).

5. The manufacturing method according to any one of claims 1 to 4, **characterized in that** the step aiming at deforming the compartmentalization wall (13) is obtained by mechanical deformation of the compartmentalization wall (13) by means of a mechanical deformation device (45, 55) comprising at least one deformation member (47, 57) designed to exert a pressure or a traction on one of the faces (49, 59) of the compartmentalization wall (13).

6. The manufacturing method according to claim 5, **characterized in that** the opening (17) is made in the compartmentalization wall (13) simultaneously with the step aiming at deforming the compartmentalization wall (13) and **in that** the opening (17) is made by means of a punch (63) mounted on the deformation member (47) of the mechanical deformation device (45).

7. The manufacturing method according to any one of claims 1 to 4, **characterized in that** the step aiming at deforming the compartmentalization wall (13) is obtained by applying a differential pressure on either side of the compartmentalization wall (13).

8. The manufacturing method according to any one of claims 1 to 7, **characterized in that** the compartmentalization wall (13) adopts in its deformed position an ogive-like, conical or frustoconical shape.
